# EUROPEAN PATENT APPLICATION

(11) **EP 4 562 997 A1**
(43) Date of publication of application: **04.06.2025**
(21) Application number: 24153665.5
(22) Date of filing: 24.01.2024
(51) Int. Cl.: A01G 9/02

(54) **MULTI-PIECE FLOWER BULB CONTAINER**

(30) Priority: 29.11.2023 US 202318523373
(71) Applicant: Paternostre, Joep, Waynesboro VA 22980 (US)
(72) Inventor: Paternostre, Joep, Waynesboro VA 22980 (US)
(74) Representative: Forresters IP LLP

(57) **Abstract**

A multi-piece flower bulb container having interlocking top and bottom pieces for retaining a flower bulb. The interlocking components allow for quick connection to facilitate a releasable, watertight connection. The top piece defines a central top opening and a second chamber portion and the bottom piece defines a first chamber portion and a reservoir. When joined to form a unitary container, the first and second chamber portions envelop the flower bulb, the reservoir is configured to allow the roots of the bulb to propagate into, and a resilient member positioned therein forces the bulb upwards allowing the uppermost part of the bulb and growing flower to extend through the central top opening of the top piece. The multi-piece flower bulb container is capable of holding flower bulbs of various shapes and sizes to create a consistent aesthetic appeal while maintaining a stable environment for a growing flower bulb.

## Description

### FIELD OF THE INVENTION

The disclosure herein pertains to the field of horticulture and, more specifically, to methods and systems for cultivating and presenting flower bulbs, in particular, the disclosure relates to a hydroponic cultivation method for certain flower bulbs, such as amaryllis, as well as a device for improving the visual appeal of the flower bulb without the use of a soil substrate or wax coating.

### DESCRIPTION OF THE PRIOR ART AND OBJECTIVES OF THE INVENTION

Certain flower bulbs, particularly amaryllis, are conventionally sold individually in vases or containers that are filled with a predetermined amount of soil. The soil is intended to retain nourishing fluid, such as water, and to maintain the flower bulb in an upright position, especially during growth, transportation, and display. The purpose of the container is to not only retain the bulb and the soil within a cavity of the container, but also to provide a certain aesthetic element to the combination. This method of cultivating and presenting flowers has been around for decades; however, in recent years there has been a growing interest in hydroponic cultivation, mainly due to the reduction of resources required.

In an effort to give the consumer maximum viewability of the flower bulb and all its components (i.e., the roots and the flowers), the soil may be removed and replaced with a non-soil substrate. In some embodiments, rocks, sand, peat moss, clay, and other similar non-soil substrates are generally used to support the flower as it grows. Due to the unique anatomy of the amaryllis bulb, they may be dipped in a wax material such that the wax dries and forms a shell around the amaryllis. In an effort to maintain the bulbs upright, the bottom of the waxed bulb includes a base component such as a footing or pedestal component. In order to wax an amaryllis, the root system of the amaryllis must first be removed so that the bottom of the amaryllis bulb is substantially flat. Next, a balloon-type sleeve covers the outside of the bulb so that the hot wax does not cause damage to the tunic of the flower bulb. Lastly, with the root system cut, and the sleeve on the amaryllis, the amaryllis is then dipped into the wax and set aside to cool and harden. This is a time consuming process that requires a great deal of manual labor due to the irregularities in the size and shape of amaryllis bulbs and that ultimately harms the bulb slightly and affects the growth of the bulb. In addition, removing the root system is not ideal.

Lastly, for certain flower bulbs, such as amaryllis, as the flower bulb grows, the bulb portion often shrinks due to the flower bulb consuming the nutrients that are stored within the bulb portion of the flower bulb. This shrinkage often diminishes the aesthetic appeal of the bulb-container combination because the container appears too large, and the bulb portion appears shriveled. Additionally, for waxed embodiments, it is not possible to provide a nourishing fluid to the roots portion of the flower bulb effectively, creating a poor growing environment.

Thus, in view of the problems and disadvantages associated with prior art devices, the present disclosure was conceived and one of its objectives is to provide a flower bulb container capable of retaining an amaryllis bulb without causing damage to the bulb.

It is another objective of the present disclosure to provide a container for retaining an amaryllis which creates an ideal environment for the amaryllis to grow and allows the roots portion to receive a nourishing fluid.

It is still another objective of the present disclosure to provide a flower bulb container that is capable of holding amaryllis bulbs of various shapes and sizes.

It is yet another objective of the present disclosure to provide a container for retaining a flower bulb with a watertight bottom, a top with a top opening, and a resilient member positioned between the bottom piece of the container and the roots portion of the flower bulb.

It is a further objective of the present disclosure to provide a flower bulb container that provides a novel way to delivering a nourishing fluid to the roots portion of the flower bulb, thereby enhancing the growth, and facilitating the growth of more vibrant flowers.

It is still a further objective of the present disclosure to provide a flower bulb container that is easily manufactured and convenient to use.

It is yet a further objective of the present disclosure to provide a flower bulb container that creates a stable environment for a flower bulb and prevents the flower bulb from tipping over when the container is placed on a flat surface.

It is another objective of the present disclosure to provide a multi-piece flower bulb container that urges a flower bulb upwards within the container to remove any gap between the top periphery of the container and a neck portion of the flower bulb so that the neck of the flower bulb remains snug as it emerges from the top opening.

Various other objectives and advantages of the present disclosure will become apparent to those skilled in the art as a more detailed description is set forth below.

### SUMMARY OF THE INVENTION

The aforesaid and other objectives are realized by providing a container for retaining a flower bulb, the container including a top piece and a bottom piece. The top piece and bottom piece preferably interlock, snap together, or are capable of joining one another to form a single container. In the preferred embodiment, the bottom piece includes a base and a sidewall extending from an outer edge of the base and terminating at an upper periphery defining an opening. The sidewall defines an internal surface and an external surface, and the base defines an interior base surface and an exterior base surface. The base and sidewall together define a first chamber portion and a reservoir within the interior space of the bottom piece. The reservoir is defined at the bottom end of the bottom piece and is configured (i.e., sized, shaped, and otherwise capable) to allow the roots of the bulb to propagate therein, to retain one or more resilient members that force the bulb upwards, and to store a nourishing component. One or more interior and/or internal surfaces of the bottom piece may include a plurality of radially extending projections configured to ensure proper positioning (e.g., alignment) of the bulb within the container. The projections ensure that the bulb is retained above the reservoir such that only the roots portion of the flower bulb spills into the reservoir. The projections also create a gap between the interior and/or internal surfaces of the bottom piece and the bulb portion of the flower bulb, effectively promoting airflow around the bulb portion and roots portion.

In the preferred embodiment, the top piece includes a sidewall extending from a central top opening defining a top periphery and terminating at a bottom periphery defining a bottom periphery opening. The top piece sidewall defines an internal surface and an external surface. The top piece defines a second chamber portion therein for receiving the upper portion of the flower bulb and the central top opening allows the uppermost part of the bulb and growing flower to extend therethrough. The bottom periphery of the top piece and the upper periphery of the bottom piece each include interlocking components that facilitate a releasable, watertight connection between the bottom piece and the top piece by the use of respective interlocking features such as studs and slots (i.e., bayonet connection) allowing for quick and easy connection.

### BRIEF DESCRIPTION OF THE DRAWINGS

Fig. 1 shows a top perspective view of a multi-piece flower bulb container of the present disclosure;
Fig. 2 pictures a bottom perspective view of the container of Fig. 1;
Fig. 3 depicts an exploded top perspective view of the container of Fig. 1;
Fig. 4 demonstrates an exploded top plan view of the container of Fig. 1;
Fig. 5 illustrates an exploded bottom plan view of the container of Fig. 1;
Fig. 6 features an exploded back elevational view of the container of Fig. 1;
Fig. 7 shows an exploded front elevational view of the container of Fig. 1;
Fig. 8 illustrates an exploded right side elevational view of the container of Fig. 1;
Fig. 9 depicts an exploded left side elevational view of the container of Fig. 1;
Fig. 10 demonstrates an exploded cross sectional view as seen along lines 10-10 in Fig. 4; and
Fig. 11 schematically illustrates a front elevational view of the multi-piece flower bulb container of Fig. 1 containing an amaryllis bulb shown in broken line.

### DETAILED DESCRIPTION OF THE PREFERRED EMBODIMENT AND OPERATION OF THE INVENTION

Various exemplary embodiments of the present disclosure are described below. Use of the term "exemplary" means illustrative or by way of example only, and any reference herein to "the disclosure" is not intended to restrict or limit the disclosure to exact features or step of any one or more of the exemplary embodiments disclosed in the present specification. References to "exemplary embodiment", "one embodiment", "an embodiment", "various embodiments", and the like may indicate that the embodiment(s) of the disclosure so described may include a particular feature, structure, or characteristic, but not every embodiment necessarily incudes the particular feature, structure, or characteristic. Further, repeated use of the phrase "in one embodiment", "in an exemplary embodiment", or "in an alternative embodiment" do not necessarily refer to the same embodiment, although they may.

It is also noted that terms like "preferably", "commonly", and "typically" are not utilized herein to limit the scope of the disclosure or to imply that certain features are critical, essential, or even important to the structure or function of the disclosure. Rather, these terms are merely intended to highlight alternative or additional features that may or may not be utilized in a particular embodiment of the present disclosure.

The present disclosure is described more fully hereinafter with reference to the accompanying figures, in which one or more exemplary embodiments of the disclosure are shown. Like numbers used herein refer to like elements throughout. The disclosure may, however, be embodied in many different forms and should not be construed as limited to the embodiments set forth herein; rather, these embodiments are provided so that this disclosure will be operative, enabling, and complete. Accordingly, the particular arrangements disclosed are meant to be illustrative only and not limited as to the scope of the disclosure, and any and all equivalents thereof. Moreover, many embodiments such as adaptations, variations, modifications, and equivalent arrangements will be implicitly disclosed by the embodiments described herein and fall within the scope of the instant disclosure.

Although specific terms are employed herein, they are used in a generic and descriptive sense only and not for the purposes of limitation. Unless otherwise expressly defined herein, such terms are intended to be given their broad, ordinary, and customary meaning not inconsistent with that applicable in the relevant industry and without restriction to any specific embodiment hereinafter described. As used herein, the article "a" is intended to include one or more items. Where only one item is intended, the terms "one and only one", "single", or similar language is used. When used herein to join a list of items, the term "or" denotes at least one of the items but does not exclude a plurality of items of the list.

For exemplary methods or processes of the disclosure, the sequence and/or arrangement of steps described herein are illustrative and not restrictive. Accordingly, it should be understood that, although steps of various processes or methods may be shown and described as being in a sequence or temporal arrangement, the steps of any such processes or methods are not limited to being carried out in any particular sequence or arrangement, absent an indication otherwise. Indeed, the steps in such processes or methods generally may be carried out in various different sequences and arrangements while still falling within the scope of the present disclosure.

Additionally, any references to advantages, benefits, unexpected results, or operability of the present disclosure are not intended as an affirmation that the disclosure has previously been reduced to practice or that any testing has been performed. Likewise, unless stated otherwise, use of verbs in the past tense (present perfect or preterit) is not intended to indicate or imply that the disclosure has previously been reduced to practice or that any testing has been performed.

The container described in this disclosure may be used in combination with a flower bulb, such as an amaryllis. For the purposes of this disclosure, a flower bulb at least includes a bottom root portion extending downward from a central bulb portion, and an upper stem portion extending upward from the central bulb portion. The root portion extends downward from a root plate defined on the bottom of the central bulb portion. The stem portion extends upward from a neck defined on the top of the central bulb portion.

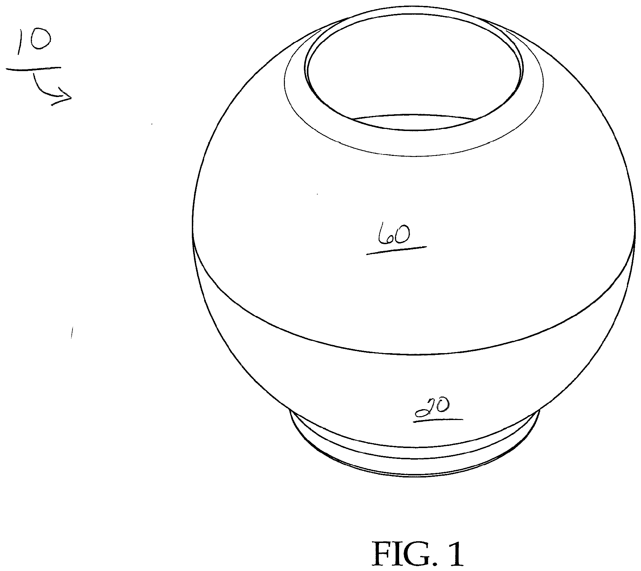

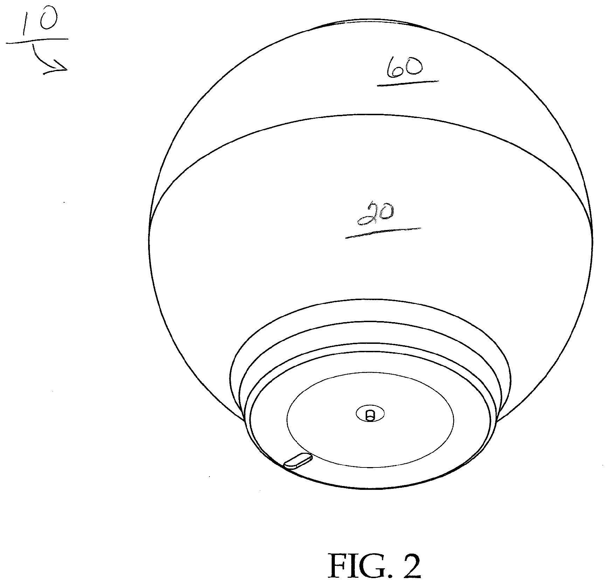

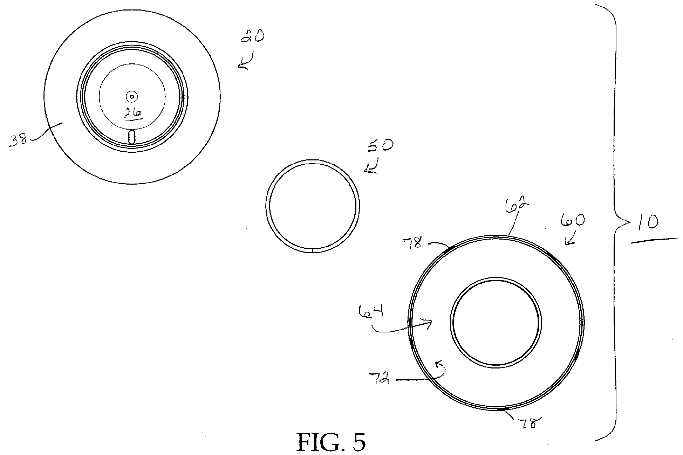

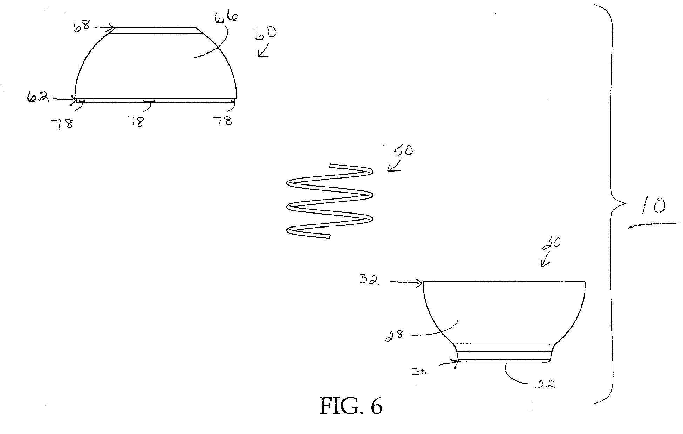

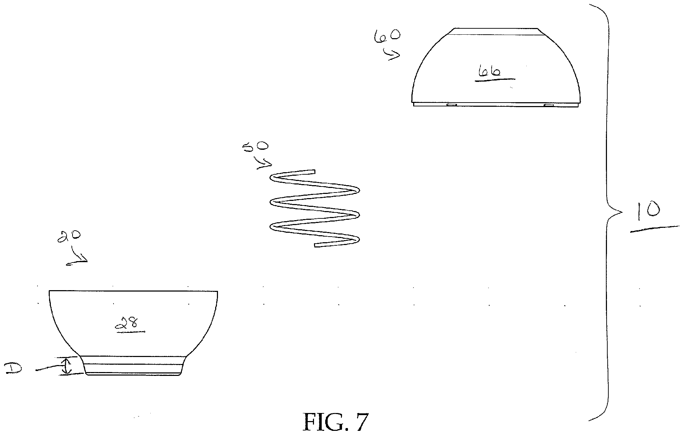

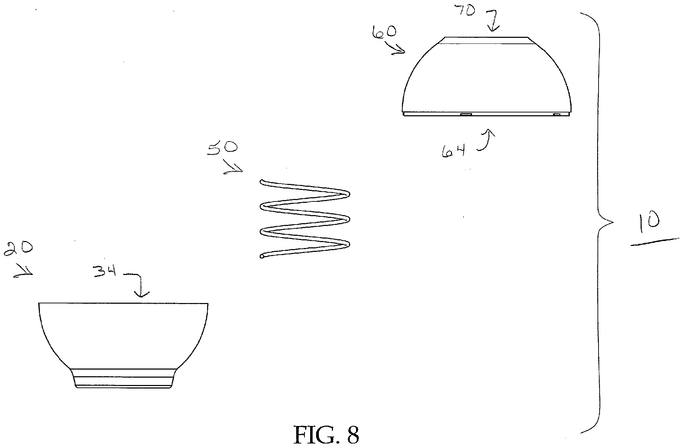

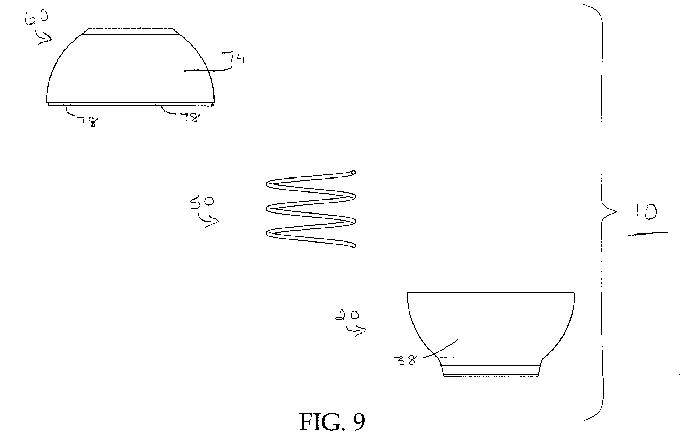

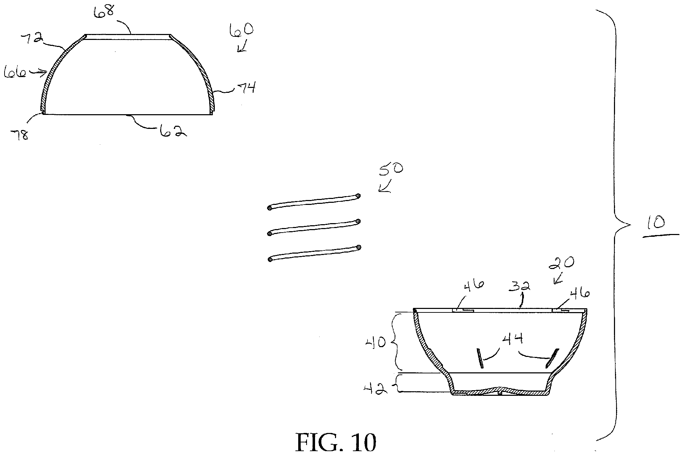

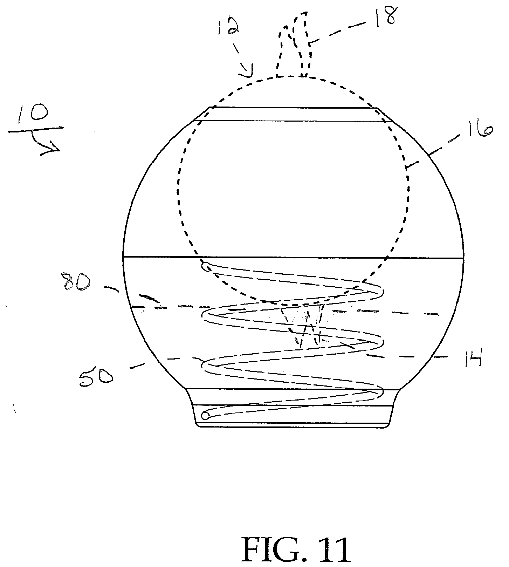

For a better understanding of the disclosure and its operation, turning now to the drawings, Figures 1-11 illustrate various orientations of a preferred embodiment of a multi-piece flower bulb container 10. The multi-piece flower bulb container 10 disclosed herein includes a bottom piece 20 and a top piece 60 that come together to form the multi-piece flower bulb container 10. The bottom piece 20 is waterproof and is capable of holding the roots of the bulb as they propagate therein during growth, one or more resilient members 50 that force the bulb upwards, and one or more nourishing components. The bottom piece 20 includes a base 22 configured to allow the container 10 to remain upright when placed on a flat surface. The base 22 defines an interior base surface 24 and an exterior base surface 26. The bottom piece 20 includes a sidewall 28 that extends upwardly from an outer edge 30 of the base 22 and terminates at an upper periphery 32 defining an upper periphery opening 34. In a preferred embodiment, the upper periphery opening 34 defines a diameter ranging between about twenty-two centimeters (22 cm) and forty-two centimeters (42 cm). The upper periphery 32 of bottom piece 20 is preferably formed having an internal groove and includes a series of interlocking features 46 therearound. The sidewall 28 defines an internal surface 36 and an external surface 38. The interior base surface 24 and internal surface 36 of the bottom piece 20 define a first chamber portion 40 and a reservoir 42. The first chamber portion 40 is situated above the reservoir 42 and is in fluid communication with the reservoir 42. The first chamber portion 40 is configured (i.e., sized, shaped, and otherwise capable of) to receive, retain, and support a substantial portion of the flower bulb, such as flower bulb 12 as demonstrated in broken line in Fig. 11 above the reservoir 42 and within the first chamber portion 40. It is preferred that the first chamber portion 40 retain at least half of the bulb portion 16 of the flower bulb 12. Stated differently, when the flower bulb 12 is placed within the bottom piece 20, the first chamber portion 40 is preferably substantially occupied by the bulb portion 16 of the flower bulb 12. The reservoir 42 may be configured (i.e., sized, shaped, and otherwise capable of) to receive the roots portion 16 of the flower bulb 12 as the roots propagate during growth, any nourishing components that may be placed therein to provide nutrients to the roots portion 16 of the flower bulb 12, and/or one or more resilient members 50 to urge the flower bulb 12 upwards into the top piece 60, as will be described further herein.

In the preferred embodiment, the bottom piece 20 of the multi-piece flower bulb container 10 may include one or more projections 44 disposed on the internal surface 36 of the sidewall 28, the interior base surface 24 of the base 22, or both the internal surface 36 and the interior base surface 24. The one or more projections 44 are preferably annularly disposed around one or more of the internal surface 36 and the interior base surface 24 of the bottom piece 20 to bifurcate the interior space of the bottom piece 20 into the first chamber portion 40 and the reservoir 42. The projections 44 may be configured (i.e., sized, shaped, otherwise capable of) to support the bulb portion 16 of the flower bulb 12 so that the bulb portion 16 is substantially centered within the bottom piece 20. In some embodiments, the internal surface 36 of the sidewall 28 defines one or more projections 44. In other embodiments, the interior base surface 24 of the base 22 defines one or more projections 44. In yet another embodiment, one or more projections 44 are disposed on the interior base surface 24 of the base 22 and the internal surface 36 of the sidewall 28. The one or more projections 44 facilitate an ideal growing environment for the flower bulb 12 by preventing the bulb portion 16 from rotting due to excess moisture by enhancing air flow around the bulb portion, supporting the bulb portion 16 above the reservoir 42 while ensuring the flower bulb 12 remains stable and visible for aesthetic purposes. Because the roots portion of the bulb will propagate downwards due to gravity, the roots portion will easily be able to access any nourishing components present in the reservoir 42.

In a preferred embodiment, the radius of the outer edge 30 of base 22 is less than the upper periphery 32 of bottom piece 20. In the embodiment shown in the figures, the sidewall 28 initially extends from the outer edge 30 in a substantially vertical manner for a predetermined distance D to form a pedestal. At a certain point (i.e., approximate the predetermined distance D) the sidewall 28 then extends in a substantially convex manner, curving outwardly, until the upper periphery 32 to form a bowl-shaped portion, or first chamber portion 40. The pedestal portion or reservoir 42 elevates the first chamber portion 40 and also has a volume less than the volume of the first chamber portion 40. In a preferred embodiment, the radius of the top periphery 68 is less than the bottom periphery 62 of top piece 60. In the embodiment shown in the figures, the sidewall 66 initially extends from the top periphery 68 downward in a substantially convex manner, curving outwardly, until the bottom periphery 62 to form a bowl-shaped portion, or second chamber portion 76. The second chamber portion 76 of top piece 60 mating with the first chamber portion 40 of bottom piece 20 to form container 10 including a bulbous chamber therein to receive and maintain a flower bulb such as bulb 12 therein.

After the flower bulb 12 is placed within the bottom piece 20 of the container 10, the top piece 60 joins the bottom piece 20 to form a unitary container 10 having a smooth outer surface for aesthetic appeal. In other embodiments, the outer surface may include aesthetic features that do not create a smooth outer surface (i.e., indentations or grooves). The top piece 60 includes a bottom periphery 62 defining a bottom periphery opening 64 and includes a sidewall 66 extending upwardly from the bottom periphery 62 to a top periphery 68 defining a top central opening 70. The bottom periphery 62 of top piece 60 is preferably formed having an internal ridge which includes a series of interlocking features 78 therearound for mating with the interlocking features 46 on the upper periphery 32 of bottom piece 20. The top central opening 70 is configured (sized, shaped, or otherwise capable) to allow the stem 18 of the flower bulb 12 to extend therethrough. In a preferred embodiment, the top central opening 70 defines a diameter ranging between about two centimeters 2 cm and six centimeters 6 cm. The sidewall 66 of the top piece 60 defines an inner surface 72 and an outer surface 74, and the interior space of the top piece 60 defines a second chamber portion 76. The first chamber portion 40 and the second chamber portion 76 are configured (sized, shaped, or otherwise capable) to be substantially occupied by the bulb portion 16 when the flower bulb 12 is placed within the container 10 so that unwanted movement of the flower bulb 12 within the container 10 is prevented. The top piece 60 may be configured (i.e., sized, shaped, and otherwise capable) to releasably join with the bottom piece 20 to form the container 10. In a preferred embodiment, the bottom periphery 62 of top piece 60 and the upper periphery 32 of bottom piece 20 are complementary such that the top piece 60 and the bottom piece 20 may form a substantially watertight seal. In a preferred embodiment, the upper periphery 32 of the bottom piece 20 includes interlocking features 46 such as slots that coincide and releasably join with interlocking features 78 such as studs included on the bottom periphery 62 of the top piece 60. With the top piece 60 releasably joined to the bottom piece 20, the flower bulb 12 is essentially entrapped and will remain in an upright orientation throughout growth, transportation, and display. The flower bulb 12 is held in a stable posture and prevented from falling out of the container 10 once the top piece 60 joins the bottom piece 20.

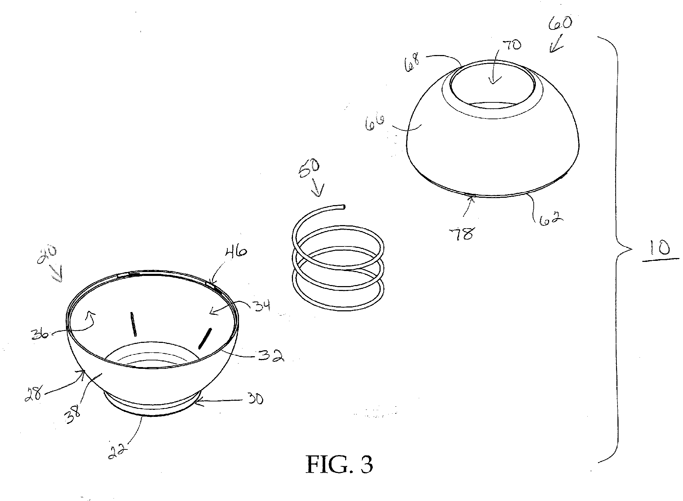

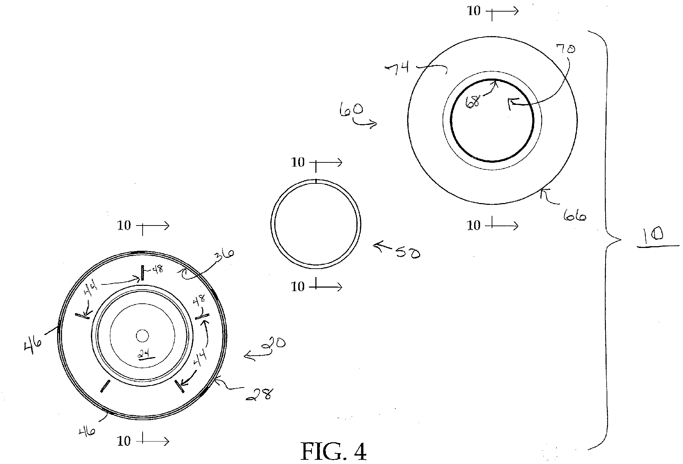

The one or more projections 44 may facilitate air flow in the first chamber portion 40 and reservoir 42. When the flower bulb 12 is placed within the bottom piece 20, the bulb portion 16 of the flower bulb 12 rests against the projections 44 which facilitate a slight gap between the internal surface 36 and the bulb portion 16 of the flower bulb 12, allowing airflow around the bulb portion 16 to the roots portion 14 of the flower bulb 12 in the reservoir 42. Airflow to the reservoir 42 will increase the amount of air circulation to the roots portion 14 and any nourishing components placed within the reservoir 42, effectively promoting healthier growth for the flower bulb 12. The projections 44 are configured to funnel the flower bulb 12 such that the stem 18 of the flower bulb 12 may grow centrally through the top central opening 70. In the preferred embodiment, the laterally extending projections 44 include a surface 48 that preferably funnels and centers the bulb within the bottom piece 20 to maintain the bulb 12 above the reservoir 42. The surface(s) 48 that serve as a supportive area for the bulb portion 16 may be situated on a flat plane or a parabolic plane to ensure even weight distribution, enhanced bulb stability, and contribute to the security of the bulb within the container 10. As best shown in Figures 3 and 4, the preferred bottom piece 20 includes five, equally spaced apart projections 44, each defining a supportive surface 48, and the five supportive surfaces 48 are defined on a parabolic plane.

As illustrated in the Figures, the container 10 may include one or more resilient members 50 positioned in the reservoir 42 of the bottom piece 20. The resilient member 50 may include any component that may urge the flower bulb 12 upwards, such as, but not limited to, a spring, sponge, foam body, and water-absorbing material, to elevate the bulb portion 16 above the reservoir 42 to ensure the reservoir 42 is not occupied by the bulb portion 16 of the flower bulb 12. The resilient member 50 is configured (i.e., sized, shaped, and otherwise capable) to be positioned within the reservoir 42 and engage the bottom end of the bulb portion 16 to urge the flower bulb 12 upwards. In the preferred embodiment, the one or more resilient members 50 includes a spring component made of a material suitable for positioning in a fluid solution (i.e., water). In other embodiments, the resilient member 50 may be a foam or sponge component made of a material capable of urging the flower bulb upwards while retaining and storing a predetermined amount of nourishing fluid.

Certain flower bulbs, such as amaryllis, shrink during growth as a result of the bulb consuming the nutrients that are stored within the bulb, such that the container often appears too large, diminishing the aesthetic appeal of the flower bulb 12. Urging the flower bulb 12 upwards within the container 10 enhances the aesthetic appeal of the flower bulb 12 by essentially removing any gap between the top periphery 68 and the bulb portion 16 of the flower bulb 12. Stated differently, the resilient member 50 pushes the flower bulb 12 upwards within the container 10 such that bulb portion remains in close contact with the inner surface 72 of the top piece 60. The resilient member 50 allows the neck of the bulb portion 1 to always be kept in place against the inner surface of the top piece 60 even when the bulb portion 16 shrinks over time. Without a resilient member 50 positioned within the reservoir 42, as the bulb shrinks during growth, a gap may form between the bulb portion 16 and inner surface 72 of the top piece 60. In the preferred embodiment, container 10 includes a resilient member 50 to assist with holding bulb 12 upwards during growth allowing the top of the bulb 12 to be visible within top central opening 70 and preferably against top periphery 68 of top piece 60. While shown herein as a conventional spring, resilient member 50 may take the shape of any helical compression form such a conical, hourglass, barrel, variable, or constant pitch, and is preferably formed from a material that will not rust or that includes a protective coating to prevent rust within the moisture rich environment.

The preferred embodiment includes a nourishing component 80 placed within the reservoir 42 to provide a source of nutrients for the flower bulb 12. In other embodiments (not shown) the reservoir does not contain any nourishing component(s) 80. The nourishing component 80 may include water, plant growth regulators, peat pellet, and any other component that provides nutrients to the root portion. As the roots propagate into the reservoir 42, they will grow around and bathe in the reservoir, while absorbing the nutrients needed for healthy growth. When the nourishing component(s) 80 are fully consumed by the roots portion, the flower bulb 12 may be pressed downward, compressing the resilient member 50 until the root plate of the bulb portion contacts the supportive surfaces 48 of the one or more projections 44, thereby creating a gap between the bulb portion 16 and inner surface 72 of the top piece 60 that allows fluid to pass around the bulb portion 16 and spill into the reservoir 42.

When the flower bulb has reached the end of its life span, the top piece 60 of the container 10 is easily releasable so that the flower bulb 12 may be removed and replaced with another, new flower bulb 12. The container 10 is environmentally friendly due to its unlimited reusability. The components of the container 10 may be produced using various processes, such as, but not limited to, vacuum forming, additive manufacturing, or injection molding. The simplicity of the design of each of the components allows for various manufacturing methods, which reduces the overall cost of the production of such a container 10. A portion of the container 10 may include a defect or artifacts such as blisters or dimples to assist in the removal of certain components from the injection molding equipment. In the preferred embodiment, these defects or artifacts are located on the exterior surface 26 of the base 22 so that they are hidden from sight. The selection of appropriate material would be within the ability of the personality appreciate that certain qualities of tensile strength or compressibility may be desirable, particularly if an interlocking configuration (i.e., bayonet) is intended. The sidewalls of the container may be opaque, transparent, or translucent, depending on the desirability to see the flower bulb 12 within the container 10. The transparent or translucent characteristic of the container 10 further allows ambient light to reach the roots to ensure healthy growth of strong stems and beautiful flowers thereby increasing their aesthetic appeal to the purchaser. The bottom piece 20 is waterproof and includes a continuous sidewall. In some embodiments, the top piece 60 may not be waterproof and may include a non-continuous sidewall.

The illustrations and examples provided herein are for explanatory purposes and are not intended to limit the scope of the appended claims.

## Claims

1. A multi-piece container (10) for retaining a flower bulb (12), the container (10) comprising:
a bottom piece (20) and a top piece (60);
the bottom piece (20) including a base (22) and a sidewall (28) extending from an outer edge (30) of the base (22) and terminating at an upper periphery (32) defining an upper periphery opening (34), the base (22) defining an interior base surface (24) and an exterior base surface (26), the sidewall (28) defining an internal surface (36) and an external surface (38), and the interior base surface (24) and the internal surface (36) define a first chamber portion (40) and a reservoir (42) below and in fluid communication with the first chamber portion (40); and
the top piece (60) having a bottom periphery (62) defining a bottom periphery opening (64), a sidewall (66) extending from the bottom periphery (62) to a top periphery (68) defining a top central opening (70);
wherein the upper periphery (32) and the bottom periphery (62) are configured to be complementary to facilitate a secure, substantially water-tight connection between the bottom piece (20) and the top piece (50);
wherein a flower bulb (12) is placed within the container (10) so that a bulb portion (16) rests above the reservoir (42).

2. The container (10) of claim 1, further comprising one or more projections (44) disposed on internal surface (36) of the bottom piece (20).

3. A container (10) for entrapping a flower bulb (12), the container (10) comprising:
a bottom piece (20) and a top piece (60),
the bottom piece (20) including a base (22) and a continuous sidewall (28) extending from an edge (30) of the base (22) and terminating at an opening (34) defining a continuous upper periphery (32), the base (22) defining an interior base surface (24) and an exterior base surface (26), the continuous sidewall (28) defining an internal surface (36) and an external surface (38), the interior base surface (24) and the internal surface (36) defining a first chamber portion (40) and a reservoir (42) below the first chamber portion (40),
the top piece (60) defining a bottom periphery opening (64) defining a bottom periphery (62), the bottom periphery (62) and the upper periphery (32) configured to be concentric to facilitate a connection between the bottom piece (20) and the top piece (60); and
wherein one or more projections (44) bifurcate the first chamber portion (40) and the reservoir (42) by supporting a substantial portion of the flower bulb (12) above the reservoir (42) and within the first chamber portion (40).

4. The container (10) of claim 2 or 3, wherein each of the one or more projections (44) defines a supportive surface (48) and each of the supportive surfaces (48) are defined on a parabolic plane.

5. The container (10) of any preceding claim, further comprising one or more projections (44) disposed on the interior base surface (24) of the bottom piece (20).

6. The container (10) of any preceding claim, further comprising a resilient member (50) positioned within the reservoir (42).

7. The container (10) of claim 6, wherein the resilient member (50) is selected from the group consisting of a spring, sponge, foam body, and water-absorbing material.

8. The container (10) of any preceding claim, wherein the reservoir (42) defines a reservoir volume, and the first chamber portion (40) defines a chamber volume, and wherein the reservoir volume is less than the chamber volume.

9. The container (10) of any preceding claim, wherein the upper periphery opening (34) defines a diameter ranging between about twenty-two centimeters (22 cm) and forty-two centimeters (42 cm).

10. The container (10) of any preceding claim, wherein the bottom periphery opening (62) defines a diameter ranging between about twenty-two centimeters (22 cm) and forty-two centimeters (42 cm).

11. The container (10) of any preceding claim, wherein the top central opening (70) defines a diameter ranging between about two centimeters (2 cm) and six centimeters (6 cm).

12. The container (10) of any preceding claim, wherein the upper periphery (32) of bottom piece 20 includes one or more interlocking components (46), and the bottom periphery (62) of top piece (60) includes one or more interlocking components (78) that are complementary to the interlocking components (46) of the upper periphery (32).

13. The container (10) of claim 12, wherein the one or more interlocking components (46) on the upper periphery (32) of bottom piece (20) comprise slots.

14. The container (10) of claim 12 or 13, wherein the one or more interlocking components (78) on the bottom periphery (62) of top piece (60) comprise studs.

15. The container (10) of any preceding claim, wherein the reservoir contains at least one nourishing component (80) selected from the group consisting of water, plant growth regulators, peat pellet, and combination thereof.
